# EUROPEAN PATENT SPECIFICATION

(11) **EP 1 236 960 B1**
(45) Date of publication and mention of the grant of the patent: **11.05.2005**
(21) Application number: 02003289.2
(22) Date of filing: 22.02.2002
(51) Int. Cl.: F25D 3/00, F28D 20/02, B60H 1/00

(54) **Preservation apparatus particularly for perishable products at a preset temperature**
Aufbewahrungsgerät, insbesondere für verderbliche Waren bei einer vorgewählten Temperatur
Appareil de conservation en particulier pour des produits périssables à une température prédéterminée

(30) Priority: 28.02.2001 IT MI010407
(43) Date of publication of application: 04.09.2002
(73) Proprietor: High Technology Participation S.A., 1526 Luxembourg (LU)
(72) Inventor: Ghiraldi, Alberto, 21038 Reno di Leggiuno (Prov. of Varese) (IT)
(74) Representative: Modiano, Guido, Dr.-Ing.

(56) References cited:
- WO-A-99/58912
- CH-A- 435 344
- DE-A- 4 404 780
- DE-A- 19 615 506
- FR-A- 2 118 905
- FR-A- 2 574 531
- GB-A- 724 303
- US-A- 2 499 736
- US-A- 2 859 945
- US-A- 4 928 501
- US-A- 5 172 567
- US-A- 6 094 933

## Description

The present invention relates to an apparatus particularly for preserving perishable products at a preset temperature.

It is known that in order to transport and preserve perishable products, such as for example foodstuffs, the temperature inside the preservation space must be kept at constant values that correspond as much as possible to temperature values that are preset in each instance depending on the type of said products.

Currently, preservation is based on the use of chambers which in practice form a refrigerated environment.

In order to solve this problem, EP-0 664 426 discloses a chamber, for example of the container type, that has the particularity of having, at most of the surface of its walls, interspaces in which there are fluids having a high heat capacity which remain at a relatively low temperature, so as to be able to perform a heat exchange that allows to keep constant the temperature conditions inside the container.

This type of solution has several drawbacks, such as for example high constructive complexity and poor operating flexibility, since it is not easily possible to replace the thermal accumulation liquid.

Another drawback that can be ascribed to the above described solution is constituted by the fact that providing the heat exchange elements within the thickness of the walls changes the dimensions of the interior of the container, causing palletization to be extremely inefficient, since the reduction of the useful width makes it impossible to insert standard pallets side by side.

Moreover, another problem is constituted by the fact that the refrigerating liquid must be thermally treated at fixed recharging units, with consequent considerable logistic and organizational complications.

Another drawback is furthermore constituted by the fact that the container thus provided has a particularly high tare.

Because of this situation, the above described solution is able to meet only a small percentage of market requirements, also taking into account the fact that the presence of the heat exchangers on the lateral surfaces of the internal chamber leads to high risk of puncture, with consequent dissemination of liquids and damage to the characteristics of the unit.

GB 724 303 discloses an apparatus as claimed in the preamble of claim 1.

The aim of the present invention is to overcome the above noted drawbacks, by providing an apparatus particularly for preserving perishable products at a preset temperature that can have a particularly large heat exchange surface, thus allowing to optimize all thermal treatment steps, both when the apparatus is used for distributing products and therefore the chamber is opened many times, and when the apparatus is used for long-haul preservation or transportation and therefore the chamber is opened a limited number of times.

Within this aim, a particular object of the invention is to provide an apparatus that allows to maintain inside it temperatures that are suitable for both fresh and frozen products.

Another object of the present invention is to provide an apparatus that is completely independent of the system of fixed ground-based recharging units and is thus able to cope even with transportation of indefinite duration.

Another object of the invention is to provide an apparatus that allows palletization by using standard pallets, since it can be provided in a container without having to resort to an unacceptable increase in the thickness of the walls.

Another object of the present invention is to provide an apparatus in which, in addition to reducing the tare, it is possible to minimize the negative effects caused by the accumulation of ice on the heat exchangers due to the opening of the doors, thus making the unit particularly suitable for flash-freezing of the products and distribution of foodstuffs.

This aim and these and other objects that will become better apparent hereinafter are achieved by an apparatus as defined in claim 1.

Further characteristics and advantages of the invention will become better apparent from the description of a preferred but not exclusive embodiment of an apparatus particularly for preserving perishable products at a preset temperature, illustrated only by way of non-limitative example in the accompanying drawings, wherein:

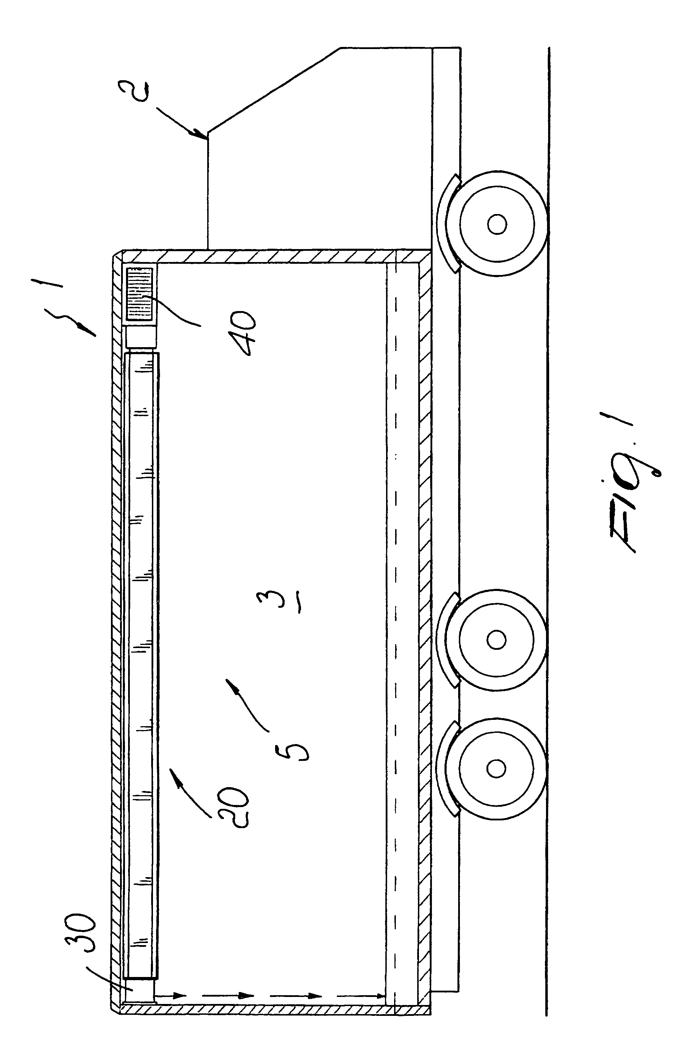

Figure 1 is a schematic view of the apparatus according to the invention, applied to a means of transport;
Figure 2 is a sectional view of the chamber with the apparatus with heat exchangers;

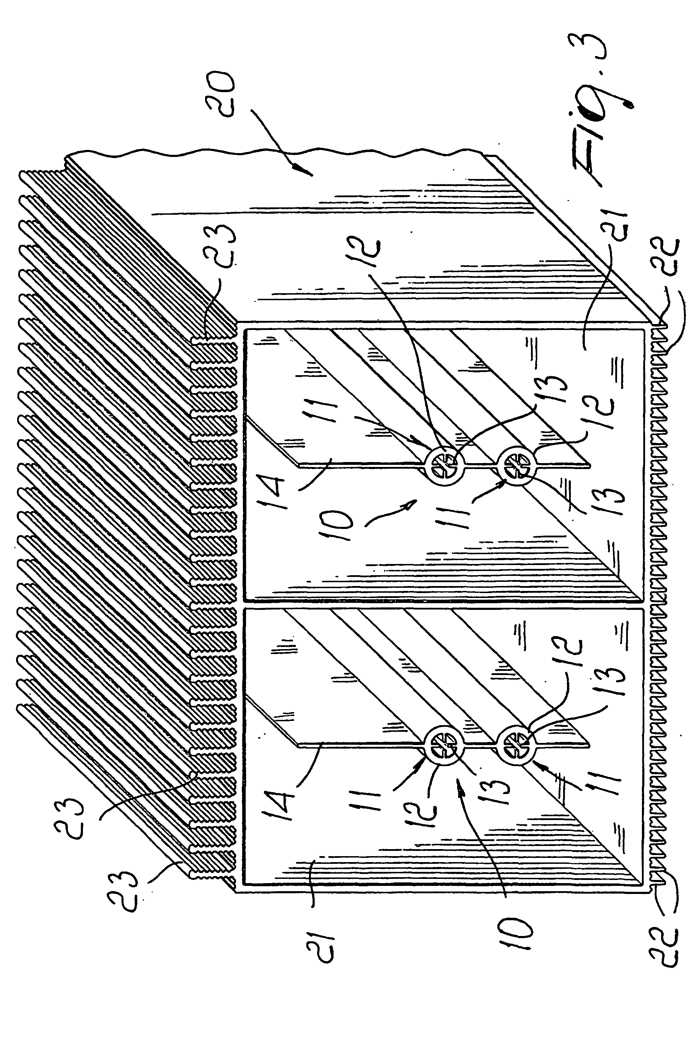

Figure 3 is a sectional perspective view of a heat exchanger.

With reference to the figures, the apparatus for preserving perishable products at a preset temperature, according to the invention, comprises a containment body, generally designated by the reference numeral 1, which is constituted for example by a conventional container or panel-type body, which is placed inside a vehicle, which is generally designated by the reference numeral 2.

The containment body 1 internally forms a chamber 3, which has walls, generally designated by the reference numeral 4, which are thermally insulated according to conventional criteria so as to form an internal space that allows palletization of the products by using standard pallets.

Inside the chamber 3 there are heat exchangers, generally designated by the reference numeral 5, which are meant to optimize the heat exchange steps in order to allow to maintain a preset temperature level; the heat exchangers are placed only at the ceiling of the chamber.

In a specific illustrated embodiment, the heat exchangers 5 comprise a heat accumulator, which is constituted by an inner body, generally designated by the reference numeral 10, which is advantageously provided by an inner tubular element 11 that forms a core 12 optionally provided with central fins 13 which protrude radially.

For each inner body there is preferably an outgoing inner tubular element and a return tubular element, and the two tubular elements arranged side by side are advantageously joined by a wing 14, which is preferably arranged vertically.

A refrigeration fluid, constituted by Freon or non-freezing solution, is circulated inside the inner tubular element 11.

The inner body 10 is arranged inside an outer tubular element, designated by the reference numeral 20, which is preferably rectangular with elements that are closed at their ends in order to form in practice an interspace 21 for containing a heat capacity mass inside which the inner body 10 is placed; said inner body exchanges heat with the heat capacity mass, which is formed by a eutectic mix that in practice surrounds the inner body, which acts as an evaporator; the eutectic mixture or solution can be defined according to the regimen of storage (either fresh or frozen) of products to be stored in the chamber 3.

The outer tubular elements that form, together with the inner body 10, a heat accumulator are meant to exchange heat with the air and condense the excess humidity as water and ice.

The outer tubular element 20 has lower fins 22 and upper fins 23, which form a considerable heat exchange surface, with a ratio of preferably > 9:1 between generated surface and occupied surface.

The ratio between the total heat exchange surface of the accumulator and the inner surface of the chamber 3 is > 1:1.

The ΔT between the heat exchange surface and the air is preferably < 2 °C and the ratio between the surface of the outer tubular element and the volume of the container is typically > 2 m²/m³, and the amount of water condensed on the surface with 99% external humidity and an external temperature T = 30 °C for each door opening and with a filling coefficient of approximately 50% must produce a film of no more than 0.1 mm.

The inner surface of the outer tubular element is meant to exchange heat with the eutectic solution and the outer surface, and has a ratio > 4 times the occupied surface in order to allow preferably a ΔT < 1 °C between the eutectic solution and the inner surface of the outer tubular element.

The heat exchanger is installed on the ceiling inside the chamber 3, so that it will hardly likely be damaged during the steps of loading and unloading the products.

In order to cope with the typical expansions of eutectic solutions which are between 2 and 8%, each interspace formed by the outer tubular elements is provided with a point for drawing air from outside, and the chambers are filled with a eutectic solution to a volume equal to the total volume, leaving an air pocket slightly bigger than the expansion produced by freezing; after filling, vacuum is produced in the air pocket and the eutectic solution can thus freeze and expand in practice at zero pressure.

With this refinement it is possible to monitor the pressure of the air pocket, obtaining a data that allows to check the charging state of the heat accumulator, since the pressure variation is a function of the percentage of the melting of the eutectic mixture.

The evaporator, provided by means of the inner body 10, is crossed by a refrigeration fluid with a typical evaporation temperature of -10 °C for fresh products and -30 °C for deep-frozen products, so as to achieve rapid freezing of the eutectic solution.

The inner body 10 is arranged so that the inner outgoing and incoming tubular elements are located in the lower part, so as to facilitate freezing of the eutectic solution or mixture from the bottom upward; moreover, the inner body 10 is not in contact with the inner surface of the outer tubular element, thus avoiding direct contact between the evaporator and the outer tubular element.

In practice, the eutectic mixture provides a thermal filter, which during recharging avoids cold spots and therefore undercooling of the air, with consequent damage to the fresh products even with an evaporation temperature of -28 °C. In practice, it is possible to use mixtures with a different melting point in order to ensure that internal temperatures are maintained at approximately 0.5-3.5 °C for fresh products and < -19 °C for frozen products.

The circuit is subject to considerable expansions caused by the temperature difference between the Freon and the eutectic solution, which particularly at the beginning of the charging step can be 50 °C, and therefore the evaporator provided by the inner body 10 is connected only to one end of the heat accumulator and is mounted on guides provided by blocks of insulating material, which in practice allow internal sliding with theoretically nil tensions.

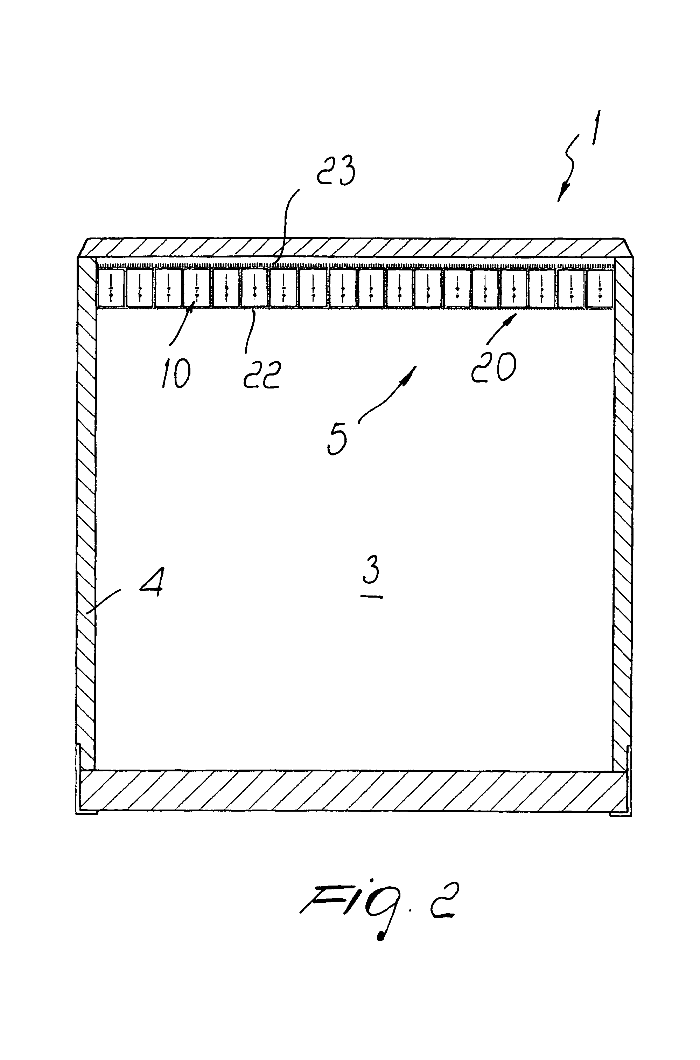

The outer tubular elements, as shown schematically in Figure 2, are arranged at the upper end of the chamber 3 and are affected by a continuous air flow by means of low-speed ventilation (< 0.1 m/s) inside the volume taken by the load, which allows to avoid damage to fresh products having no secondary packaging and to avoid excessive energy consumption.

The ventilation system comprises a fan, generally designated by the reference numeral 30, which is advantageously placed at one end of the heat exchanger and creates a circulation of air along a direction that is substantially parallel to the long side of the chamber 3, and the air is circulated between the ceiling and the upper side of the container 1.

This air circulation, when the doors are closed, is meant to produce a uniform temperature inside the container both after opening the doors and during transport, while when the doors are open a descending curtain of air is formed in practice proximate to the door, greatly limiting the exchange of air between the inside and the outside, particularly for frozen products.

On board there could also be a recharging or refrigeration unit, generally designated by the reference numeral 40, which can be constituted for example by a compressor driven by a 24 V DC motor or by a 380 V AC motor in series, provided with a condensing unit cooled by 24 V DC or 380 V AC fans, with air flow-rates that are a direct function of the power to be dissipated.

The motor-compressor assembly is connected to the evaporator and to the condensing unit by means of quick couplings, so as to be able to replace any defective component in a very short time and without specialized personnel.

The low-voltage DC power supply allows to integrate the absorption capacity of heat accumulators, thus extending the refrigeration endurance of the medium between one recharge and the next, while mains-voltage power supply allows to perform recharging anywhere, regardless of the availability of the ground recharging unit, furthermore achieving rapid refrigeration of fresh products that have not been prefrozen and coming for example directly from fields.

In practical execution, therefore, a single compressor is installed which can be connected to two separate motors, a low-voltage DC one and a mains-voltage one, bearing in mind that with a low-voltage power supply, with energy provided directly by the tractor, said energy is typically limited to 80 amps and 24 V DC, and therefore it is necessary to reduce the absorption of the compressor by acting on the rpm rate and on the evaporation temperature.

In a practical embodiment, it is possible to use a DC motor with a rotation rate of 2900 rpm, a reduction unit at 830 rpm, and an evaporation temperature of -28 °C. This entails no damage to the products by virtue of the thermal filter function of the eutectic solution, which allows to produce 1400 W/h, equal to the heat flow even of frozen products and to keep the absorption of energy within the above described terms.

The same compressor, connected to the asynchronous motor, which can be powered by mains voltage, produces over 10 kW, which are sufficient to provide the initial charging and to change the temperature from fresh to deep-frozen and also rapidly refrigerate products.

The onboard recharging unit is located so as to not reduce the actual loading volume and for intermode traffic have no outward protrusions that might be easily damageable.

The onboard refrigeration unit 40 and the fan 30 are controlled by a central unit or PLC. From the above description it is thus evident that the invention achieves the intended aim and objects, and in particular the fact is stressed that a heat exchanger with a large heat exchange surface is provided which is furthermore mechanically sturdy, since the lower fins are particularly sturdy and cannot be damaged even in case of accidental impacts.

Another important aspect of the invention is that the space occupied by the heat exchanger is reduced, consequently increasing the loading potential of the unit.

The heat exchanger as shown can be cleaned easily, thus eliminating the risk of bacterial accumulation.

A further important aspect of the invention is constituted by the fact that the above described apparatus is particularly practical and functional by virtue of the adoption of a heat accumulator that utilizes the heat capacity mass provided by the eutectic solution located in an interspace that is internally connected to a circuit for refrigeration liquid and is externally contained in the chamber to be subjected to temperature control, forming in practice a filter and a thermal buffer that renders the temperature to be obtained inside the chamber independent of the evaporation temperature of the refrigeration liquid.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus particularly for preserving perishable products at a preset temperature, comprising a containment body (1), a chamber (3) which is delimited by thermally insulating walls (4) and accommodates heat exchanger means (5), said heat exchanger means comprising a heat accumulator which has at least one inner tubular body (10) for the passage of a refrigerating fluid and at least one outer tubular element (20) which surrounds said at least one inner tubular body (10) and forms with it an interspace (21) for containing a heat capacity mass, substantially all of the outer surface of said outer tubular element (20) forming the surface for heat exchange with the air inside said chamber (3), said chamber (3) being formed inside said containment body (1) constituted by a container, **characterized in that** said heat exchanger means (5) are placed only at the ceiling of the chamber (3) and **in that** said outer tubular element comprises lower fins that are directed toward the inside of said chamber and upper fins, which are directed toward the ceiling of said chamber.

2. The apparatus according to claim 1, **characterized in that** said inner body is connected only to one end of the heat accumulator and is slidable inside said heat accumulator by sliding on guides made of thermally-insulated material, so as to accommodate thermal expansion.

3. The apparatus according to claim 1, **characterized in that** said at least one inner tubular body (10) is formed by an inner tubular element (11), which comprises an outgoing tubular element and a return tubular element, said ongoing and return tubular elements being joined by a flat wing (14)

4. The apparatus according to claim 2, **characterized in that** said inner tubular element (11) comprises a core (12) for the circulation of said refrigeration fluid, said core having fins (13) radially directed towards the centre of said inner tubular element.

5. The apparatus according to claim 1, **characterized in that** said outer tubular element (20) is substantially rectangular, with elements that are closed at their ends so as to form, in cooperation with said inner tubular body (10), said interspace (21) for containing a heat capacity mass.

6. The apparatus according to claim 1, **characterized in that** said lower and/or upper fins (22, 23) of said outer tubular element (20) are arranged longitudinally along a long side of said chamber (3) that is arranged inside said containment body (1) and are corrugated.

7. The apparatus according to one or more of the preceding claims,
**characterized in that** the heat exchange surface formed by said outer tubular element (20) is > 9:1 with respect to the surface occupied by said outer tubular element (20).

8. The apparatus according to one or more of the preceding claims,
**characterized in that** the heat exchange surface of said outer tubular element (20) is > 1:1 with respect to the inner surface of said chamber:

9. The apparatus according to one or more of the preceding claims,
**characterized in that** the ΔT between the heat exchange surface and the air is < 2°C.

10. The apparatus according to one or more of the preceding claims,
**characterized in that** the ratio between the surface of said outer tubular element (20) and the volume of said container (1) is > 2 m²/m³.

11. The apparatus according to one or more of the preceding claims,
**characterized in that** said heat capacity mass is constituted by a eutectic solution introduced in said interspace (21) with a volume equal to the total volume, leaving an air pocket slightly bigger that the expansion produced by freezing, a vacuum being produced upon filling in said air pocket.

12. The apparatus according to one or more of the preceding claims,
**characterized in that** it comprises means for checking the charging state of said heat accumulator which monitor the pressure variation caused by the percentage of the melting of said eutectic mixture.

13. The apparatus according to one or more of the preceding claims,
charactemed in that it comprises, inside said chamber (3), a fan (30) suitable to produce ventilation with a speed of <0.1 m/s for uniform distribution of the air in said chamber.

14. The apparatus according to one or more of the preceding claims,
**characterized in that** said fan is suitable to generate an air curtain proximate to the door of said chamber.

15. The apparatus according to one or more of the preceding claims,
**characterized in that** it comprises an onboard refrigeration unit (40) which has a compressor that can be driven by a low-voltage DC motor or by a motor that can be supplied with mains voltage.

16. The apparatus according to one or more of the preceding claims,
**characterized in that** said onboard refrigeration unit (40) and said fan (30) are controlled by a central unit or PLC.

17. The apparatus according to claim 1, **characterized in that** said heat capacity mass comprises eutectic mixtures with different melting points.

## Patentansprüche

1. Vorrichtung, insbesondere zum Aufbewahren verderblicher Produkte bei einer gegebenen Temperatur, aufweisend einen Aufnahmekörper (1), eine Kammer (3), die von wärmeisolierenden Wänden (4) umschlossen ist und Wärmetauschermittel (5) enthält, wobei die Wärmetauschermittel einen Wärmespeicher enthalten, der mindestens einen inneren rohrförmigen Körper (10) zum Durchleiten einer Kühlflüssigkeit und mindestens ein äußeres rohrförmiges Element (20) aufweist, das den mindestens einen inneren rohrförmigen Körper (10) umgibt und mit ihm einen Zwischenraum (21) zur Aufnahme einer wärmespeichernden Masse bildet, wobei praktisch die gesamte Außenfläche des äußeren rohrförmigen Elements (20) die Fläche für den Wärmetausch mit der Luft innerhalb der Kammer (3) bildet, wobei die Kammer (3) innerhalb des Aufnahmekörpers (1) ausgebildet ist, der von einem Behälter gebildet wird,
**dadurch gekennzeichnet,**
**dass** die Wärmetauschermittel (5) nur an der Decke der Kammer (3) angebracht sind und dass das äußere rohrförmige Element untere Rippen, die ins Innere der Kammer gerichtet sind, und obere Rippen, die zur Decke der Kammer gerichtet sind, aufweist.

2. Vorrichtung nach Anspruch 1, **dadurch gekennzeichnet, dass** der innere Körper nur mit einem Ende des Wärmespeichers verbunden ist und innerhalb des Wärmespeichers verschiebbar ist, indem er auf Führungen aus einem wärmeisolierenden Material gleitet, um die Wärmeausdehnung aufzufangen.

3. Vorrichtung nach Anspruch 1, **dadurch gekennzeichnet, dass** der mindestens eine innere rohrförmige Körper (10) von einem inneren rohrförmigen Element (11) gebildet wird, das ein abgehendes und ein rückführendes rohrförmiges Element umfasst, wobei das abgehende und das rückführende rohrförmige Element über einen flachen Flügel (14) miteinander verbunden sind.

4. Vorrichtung nach Anspruch 2, **dadurch gekennzeichnet, dass** das innere rohrförmige Element (11) einen Kern (12) zur Umwälzung des Kühlfluids hat, wobei der Kern Rippen (13) hat, die radial zur Mitte des inneren rohrförmigen Elements ausgerichtet sind.

5. Vorrichtung nach Anspruch 1, **dadurch gekennzeichnet, dass** das äußere rohrförmige Element (20) im wesentlichen rechteckig ist und Elemente hat, die an ihrem Ende geschlossen sind, so dass sie zusammen mit dem inneren rohrförmigen Körper (10) den Zwischenraum (21) zur Aufnahme einer wärmespeichemden Masse bilden.

6. Vorrichtung nach Anspruch 1, **dadurch gekennzeichnet, dass** die unteren und/oder die oberen Rippen (22, 23) des äußeren rohrförmigen Elements (20) in Längsrichtung entlang der Längsseite der Kammer (3) angeordnet sind, die im Aufnahmekörper (1) untergebracht ist, und gewellt sind.

7. Vorrichtung nach einem oder mehreren der vorstehenden Ansprüche, **dadurch gekennzeichnet, dass** die von dem äußeren rohrförmigen Element (20) gebildete Wärmeaustauschoberfläche bezogen auf die von dem äußeren rohrförmigen Element (20) eingenommene Fläche >9:1 ist.

8. Vorrichtung nach einem oder mehreren der vorstehenden Ansprüche, **dadurch gekennzeichnet, dass** die Wärmeaustauschoberfläche des äußeren rohrförmigen Elements (20) bezogen auf die Innenfläche der Kammer >1:1 ist.

9. Vorrichtung nach einem oder mehreren der vorstehenden Ansprüche, **dadurch gekennzeichnet, dass** ΔT zwischen der Wärmeaustauschoberfläche und der Luft < 2°C ist.

10. Vorrichtung nach einem oder mehreren der vorstehenden Ansprüche, **dadurch gekennzeichnet, dass** das Verhältnis der Oberfläche des äußeren rohrförmigen Elements (20) zum Rauminhalt des Behälters (1) > 2 m²/m³ ist.

11. Vorrichtung nach einem oder mehreren der vorstehenden Ansprüche, **dadurch gekennzeichnet, dass** die wärmespeichernde Masse von einer eutektischen Lösung gebildet wird, die in den Zwischenraum (21) gegeben wird, mit einem Volumen gleich dem Gesamtvolumen, wobei eine Luftblase gelassen wird, die geringfügig größer ist als die Ausdehnung beim Gefrieren, wobei nach dem Einfüllen in der Luftblase ein Vakuum erzeugt wird.

12. Vorrichtung nach einem oder mehreren der vorstehenden Ansprüche, **dadurch gekennzeichnet, dass** sie Mittel zum Überprüfen des Ladezustands des Wärmespeichers hat, welche die durch das prozentuale Schmelzen des eutektischen Gemischs bewirkte Druckänderung überwachen.

13. Vorrichtung nach einem oder mehreren der vorstehenden Ansprüche, **dadurch gekennzeichnet, dass** sie in der Kammer (3) einen Ventilator (30) hat, der eine Luftbewegung mit einer Geschwindigkeit < 0,1 m/s zur gleichmäßigen Verteilung der Luft in der Kammer erzeugen kann.

14. Vorrichtung nach einem oder mehreren der vorstehenden Ansprüche, **dadurch gekennzeichnet, dass** der Ventilator zur Erzeugung eines Luftvorhangs bei der Tür der Kammer geeignet ist.

15. Vorrichtung nach einem oder mehreren der vorstehenden Ansprüche, **dadurch gekennzeichnet, dass** sie eine Fahrzeugkühleinheit (40) ist, die einen Kompressor hat, der mit einem Niederspannungs-Gleichstrommotor oder mit einem an das Netz anschließbaren Motor betrieben werden kann.

16. Vorrichtung nach einem oder mehreren der vorstehenden Ansprüche, **dadurch gekennzeichnet, dass** die Fahrzeugkühleinheit (40) und der Ventilator (30) von einer Zentraleinheit oder einem PLC gesteuert werden.

17. Vorrichtung nach Anspruch 1, **dadurch gekennzeichnet, dass** die wärmespeichemde Masse eutektische Gemische mit unterschiedlichen Schmelzpunkten aufweist.

## Revendications

1. Dispositif, en particulier pour conserver des produits périssables à une température préétablie, comprenant un corps de réception (1), une chambre (3) qui est délimitée par des parois thermiquement isolantes (4) et qui contient des moyens formant échangeur de chaleur (5), lesdits moyens formant échangeur de chaleur comprenant un accumulateur de chaleur qui comporte au moins un corps tubulaire intérieur (10) pour le passage de fluide de réfrigération et au moins un élément tubulaire extérieur (20) qui entoure ledit corps tubulaire intérieur au nombre d'au moins un (10) et forme avec lui un espace intermédiaire (21) pour renfermer une masse de capacité thermique, sensiblement toute la surface extérieure dudit élément tubulaire extérieur (20) constituant la surface pour l'échange de chaleur avec l'air à l'intérieur de ladite chambre (3), ladite chambre (3) étant formée à l'intérieur dudit corps de réception (1) constitué par un conteneur, **caractérisé en ce que** lesdits moyens formant échangeur de chaleur (5) sont disposés uniquement au plafond de la chambre (3), et **en ce que** ledit élément tubulaire extérieur comprend des ailettes inférieures qui sont dirigées vers l'intérieur de ladite chambre et des ailettes supérieures qui sont dirigées vers le plafond de ladite chambre.

2. Dispositif selon la revendication 1, **caractérisé en ce que** ledit corps intérieur est relié à une seule extrémité de l'accumulateur de chaleur et peut coulisser à l'intérieur dudit accumulateur de chaleur en coulissant sur des guides réalisés en un matériau thermiquement isolant, de façon à s'adapter à la dilatation thermique.

3. Dispositif selon la revendication 1, **caractérisé en ce que** ledit corps tubulaire intérieur au nombre d'au moins un (10) est constitué par un élément tubulaire intérieur (11), qui comprend un élément tubulaire de sortie et un élément tubulaire de retour, lesdits éléments tubulaires de sortie et de retour étant réunis par une ailette plate (14).

4. Dispositif selon la revendication 2, **caractérisé en ce que** ledit élément tubulaire intérieur (11) comprend un coeur (12) pour la circulation dudit fluide de réfrigération, ledit coeur comportant des ailettes (13) dirigées radialement vers le centre dudit élément tubulaire intérieur.

5. Dispositif selon la revendication 1, **caractérisé en ce que** ledit élément tubulaire extérieur (20) est sensiblement rectangulaire, avec des éléments qui sont fermés à leurs extrémités de façon à former, en coopération avec ledit corps tubulaire intérieur (10), ledit espace intermédiaire (21) pour renfermer une masse de capacité thermique.

6. Dispositif selon la revendication 1, **caractérisé en ce que** lesdites ailettes inférieures et/ou supérieures (22, 23) dudit élément tubulaire extérieur (20) sont agencées de façon longitudinale le long d'une longueur de ladite chambre (3) qui est disposée à l'intérieur dudit corps de réception (1) et sont ondulées.

7. Dispositif selon l'une ou plusieurs des revendications précédentes, **caractérisé en ce que** la surface d'échange de chaleur constituée par ledit élément tubulaire extérieur (20) est > 9:1 par rapport à la surface occupée par ledit élément tubulaire extérieur (20).

8. Dispositif selon l'une ou plusieurs des revendications précédentes, **caractérisé en ce que** la surface d'échange de chaleur dudit élément tubulaire extérieur (20) est > 1:1 par rapport à la surface intérieure de ladite chambre.

9. Dispositif selon l'une ou plusieurs des revendications précédentes, **caractérisé en ce que** le ΔT entre la surface d'échange de chaleur et l'air est < 2° C.

10. Dispositif selon l'une ou plusieurs des revendications précédentes, **caractérisé en ce que** le rapport entre la surface dudit élément tubulaire extérieur (20) et le volume dudit conteneur (1) est > 2 m²/m³.

11. Dispositif selon l'une ou plusieurs des revendications précédentes, **caractérisé en ce que** ladite masse de capacité thermique est constituée par une solution eutectique introduite dans ledit espace intermédiaire (21) avec un volume égal au volume total, laissant une poche d'air légèrement plus grosse que la dilatation produite par le gel, un vide étant produit lors du remplissage dans ladite poche d'air.

12. Dispositif selon l'une ou plusieurs des revendications précédentes, **caractérisé en ce qu'**il comprend des moyens pour vérifier l'état de charge dudit accumulateur de chaleur, ceux-ci contrôlant la variation de pression provoquée par le pourcentage de la fonte dudit mélange eutectique.

13. Dispositif selon l'une ou plusieurs des revendications précédentes, **caractérisé en ce qu'**il comprend, à l'intérieur de ladite chambre (3), un ventilateur (30) approprié pour produire une ventilation avec une vitesse < 0,1 m/s pour une distribution uniforme de l'air dans ladite chambre.

14. Dispositif selon l'une ou plusieurs des revendications précédentes, **caractérisé en ce que** ledit ventilateur est approprié pour générer un rideau d'air à proximité de la porte de ladite chambre.

15. Dispositif selon l'une ou plusieurs des revendications précédentes, **caractérisé en ce qu'**il comprend une unité de réfrigération embarquée (40) qui comporte un compresseur qui peut être actionné par un moteur en courant continu basse tension ou par un moteur qui peut être alimenté par la tension du secteur.

16. Dispositif selon l'une ou plusieurs des revendications précédentes, **caractérisé en ce que** ladite unité de réfrigération embarquée (40) et ledit ventilateur (30) sont commandés par une unité centrale ou un dispositif de commande logique programmable.

17. Dispositif selon la revendication 1,
**caractérisé en ce que** ladite masse de capacité thermique comprend des mélanges eutectiques avec des points de fusion différents.
